# EUROPÄISCHE PATENTSCHRIFT

(11) **EP 3 353 455 B1**
(45) Veröffentlichungstag und Bekanntmachung des Hinweises auf die Patenterteilung: **12.02.2020**
(21) Anmeldenummer: 16777934.7
(22) Anmeldetag: 20.09.2016
(51) Int. Cl.: F16K 15/04, F16K 27/02

(54) **RÜCKSCHLAGVENTIL**
CHECK VALVE
SOUPAPE ANTIRETOUR

(30) Priorität: 25.09.2015 CH 13922015
(43) Veröffentlichungstag der Anmeldung: 01.08.2018
(73) Patentinhaber: Bloechlinger Engineering AG, 5000 Aarau (CH)
(72) Erfinder: BLÖCHLINGER, Michael, 5000 Aarau (CH)
(74) Vertreter: Herrmann, Johanna
(86) Internationale Anmeldenummer: PCT/EP2016/072335
(87) Internationale Veröffentlichungsnummer: WO 2017/050783

(56) Entgegenhaltungen:
- DE-A1-102009 043 649
- DE-A1-102012 017 953
- DE-A1-102012 207 334
- DE-A1-102012 208 808
- FR-A- 1 109 027
- GB-A- 1 218 228

## Beschreibung

Gegenstand der Erfindung ist ein Rückschlagventil. Dieses Rückschlagventil wird vormontiert und als vormontierter Bausatz in eine entsprechende Bohrung eingebracht, die einen Kanal für ein Fluid, das heisst ein Gas oder eine Flüssigkeit enthält.

Die GB740193A zeigt ein Rückschlagventil mit einer Hülse, die gleichzeitig als Ventilsitzelement ausgebildet ist. GB694138A zeigt ein Rückschlagventil, welches als Sicherheitsventil verwendet wird, welches normalerweise offen gehalten wird und im Fall einer Überhitzung im Fluidkanal geschlossen werden kann. Dieses Rückschlagventil besteht aus einer Hülse, einem schmelzbaren Zwischenelement sowie einem separaten Ventilsitzelement. Zwischen der Hülse und dem schmelzbaren Zwischenelement ist ein kugelförmiger Ventilkörper angeordnet, der von einem Federelement gegen das schmelzbare Zwischenelement gedrückt wird. Das schmelzbare Zwischenelement weist Öffnungen auf, welche ein durch die Hülse eintretendes Fluid in Richtung des Ventilsitzelementes und der darin angeordneten Bohrung leiten. Bei Überhitzung im Fluidkanal schmilzt das schmelzbare Zwischenelement, sodass der kugelförmige Ventilkörper direkt auf dem Ventilsitzelement zu liegen kommt und die Bohrung verschliesst. Die in den beiden Dokumenten gezeigten Rückschlagventile müssen in die entsprechende Bohrung des Fluidkanals eingeschraubt werden, was mit erhöhten Kosten bei der Herstellung des Rückschlagventils sowie während der Montage desselben am Einsatzort, das heisst in dem Fluidkanal, verbunden ist. Wie in der GB694138A gezeigt ist, befindet sich die Hülse in einem Adapterelement, welches ein erstes und ein zweites Ende mit je einem Aussengewinde zeigt. Das erste Ende wird mit einem Rohr verschraubt, welches den Fluidkanal ausbildet, das zweite Ende wird in einem Innengewinde eines zweiten Adapterelements aufgenommen. Das zweite Adapterelement hat wiederum ein erstes Ende, welches das Innengewinde enthält sowie ein zweites Ende, welches ein Aussengewinde aufweist. Dieses Aussengewinde ist wiederum zur Aufnahme in einem entsprechenden zweiten Rohr bestimmt. Das heisst, dass für die Herstellung des Ventils zwei Adapterelemente, eine Hülse, ein schmelzbares Zwischenelement, ein Federelement sowie ein Ventilsitzelement benötigt werden. Jedes der Adapterelemente weist zwei Gewinde auf sowie je eine zentrale Bohrung, sodass die Herstellung der Adapterelemente sowie des Ventilsitzelementes sowie der Hülse zeitaufwändig und daher teuer ist.

Beispielsweise ist in der DE 196 22 123 A1 ein Rückschlagventil gezeigt, welches in eine Bohrung eines Fluidkanals eingepresst werden kann. Dieses Rückschlagventil besteht aus einem Ventilträger, der ein Ventilsitzelement für einen kugelförmigen Ventilkörper aufweist. Der kugelförmige Ventilkörper wird durch eine Schraubendruckfeder gegen das Ventilsitzelement gepresst. Die Schraubendruckfeder ist an ihrem der Kugel gegenüberliegenden Ende in einer Hülse gehalten, die am Ventilträger gehalten ist. Der Ventilträger, die Hülse, der kugelförmige Ventilkörper und die Schraubenfeder bilden eine Einheit aus, die als solche in eine Bohrung eingesetzt werden kann. Die Hülse weist auf ihrer Mantelfläche eine Mehrzahl von Sicken auf, die sich beim Einbau elastisch verformen können, sodass die Hülse in eine Bohrung eingepresst werden kann, die einen kleineren Aussendurchmesser als die Mantelfläche der Hülse aufweist. Die Schraubendruckfeder liegt an ihrem einen Ende auf der Kugel auf, das andere Ende umgreift einen in der Bohrungsmitte angeordneten Zapfen der Hülse. Der Zapfen ist über drei Arme mit dem Mantel der Hülse verbunden. Daher weist dieses Rückschlagventil einen hohen Druckverlust auf, weil der Strömungsquerschnitt durch den Zapfen sowie die zugehörigen (Halte)arme auf weniger als die Hälfte des Strömungsquerschnitts der Bohrung reduziert wird.

Allen diesen vorbekannten Lösungen ist gemeinsam, dass sie entweder aus einer Vielzahl von Bauteilen bestehen oder nicht vormontiert in eine Bohrung eingebracht werden können. Daher besteht ein Bedarf nach einem Rückschlagventil, welches einen einfachen Aufbau hat, das heisst aus wenigen Einzelteilen besteht, die derart vormontiert werden, dass sie am gewünschten Einsatzort in einem einzigen Arbeitsschritt zusammengebaut werden können.

Nachteilig an der in der DE 196 22 123 A1 offenbarten Lösung ist auch der funktionsbedingt grosse Abstand des kugelförmigen Ventilkörpers von der Wand der Hülse, der erforderlich ist, um einen ausreichenden Durchflussquerschnitt für die am kugelförmigen Ventilkörper vorbeiströmende Fluid zu gewährleisten. Sobald der kugelförmige Ventilkörper vom Ventilsitz abhebt, ist der kugelförmige Ventilkörper auf der Ventilsitzseite axial nicht mehr geführt oder zentriert. Daher ist es gemäss dieser Lösung möglich, dass der kugelförmige Ventilkörper aus der zentralen, also mittigen Lage, ausgelenkt wird und eine undefinierte Schräglage einnimmt, sodass der Durchfluss gestört oder sogar behindert werden kann, wenn der kugelförmige Ventilkörper die Ausnehmung, welche den Auslass für das Fluid bildet, blockiert. Das Federelement wird nur durch den Boden der Hülse geführt, sodass auch die Position des Federelements auf dem kugelförmigen Ventilkörper nicht definiert ist. Um diesen Effekt zu vermeiden, kann anstelle des kugelförmigen Ventilkörpers ein topfartiges Verschlussstück verwendet werden. Dieses topfartige Verschlussstück weist einen Boden auf, der die im Ventilsitzelement befindliche Bohrung völlig verschliessen kann und einen Mantel, der entlang der Innenwand der Hülse geführt ist. Allerdings ist der Druckverlust eines derartigen Verschlussstücks, wie es in Fig. 4 der WO2008128839 A1 gezeigt ist, wesentlich höher als für einen kugelförmigen Ventilkörper, da im Boden desselben keine Öffnungen vorgesehen werden können und der Mantel die in der Hülsenwand befindlichen Öffnungen zumindest teilweise verschliesst, sodass das Fluid diesen Mantel umströmen muss. Um einen entsprechenden Durchflussquerschnitt zu gewährleisten, muss die Hülse eine entsprechend grössere Baulänge aufweisen.

Aus der DE102006007583A ist auch bekannt, ein Rückschlagventil vorzusehen, welches einen hülsenformigen Aussenteil und einen darin aufgenommenen Innenteil umfasst. Der hülsenförmige Aussenteil enthält einen Ventilsitz für einen kugelförmigen Ventilkörper, der durch ein Federelement gehalten wird, welches im Innenteil aufgenommen ist und im Innenteil geführt ist. Weil das Aussenteil gleichzeitig ein Ventilsitzelement ausbildet, welches hohen Fluidgegendrücken standhalten muss, muss dieses Aussenteil mit unterschiedlichen Wandstärken hergestellt werden, was eine aufwändige Bearbeitung desselben erfordert, sodass eine derartige Lösung mit hohen Herstellkosten verbunden ist. Beim Einbau müssen Innenteil und Aussenteil gegen die Bohrung, in welcher das Rückschlagventil aufgenommen ist, abgedichtet werden und durch eine Sicherung gesichert werden, was einerseits eine mehrstufige Bohrung erforderlich macht und andererseits durch die Justierung von Dichtung und Sicherung einen Einbauvorgang in mehreren Arbeitsschritten erforderlich macht.

Eine Aufgabe der Erfindung ist es, ein Rückschlagventil zu konzipieren, welches einfach herstellbar und in einem einzigen Arbeitsschritt einfach in einen fluidführenden Kanal einbaubar ist. Eine weitere Aufgabe der Erfindung ist es, ein Rückschlagventil bereitzustellen, welches in vormontiertem Zustand in eine Bohrung eingebaut werden kann. Eine weitere Aufgabe der Erfindung ist es, ein Rückschlagventil mit einer geringen Einbaulänge vorzusehen, welches einen möglichst niedrigen Druckverlust aufweist.

Die Lösung der Aufgaben der Erfindung erfolgt durch die Merkmale des Anspruchs 1. Weitere vorteilhafte Ausführungen sind Gegenstand der Ansprüche 2 bis 13.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für das erfindungsgemässe Rückschlagventil. In der Beschreibung und den Ansprüchen werden die Begriffe "enthalten", "umfassen", "aufweisen" als "enthalten, aber nicht beschränkt auf.." interpretiert.

Das Rückschlagventil zur Aufnahme in einem von einem Fluid durchströmbaren Kanal umfasst ein Ventilsitzelement, einen Ventilkörper, sowie eine Hülse, wobei der Ventilkörper in der Hülse derart bewegbar ist, dass er in einer ersten Position auf dem Ventilsitzelement aufliegt und in einer zweiten Position in einem Abstand vom Ventilsitzelement angeordnet ist. Das Ventilsitzelement weist eine Bohrung auf, die vom Ventilkörper in der ersten Position verschliessbar ist, wobei zwischen dem Ventilkörper und der Hülse ein Federelement angeordnet ist. Das Federelement weist ein erstes Ende und ein zweites Ende auf. Der Ventilkörper ist durch das Federelement in der ersten Position gehalten, solange der in der Bohrung anliegende Fluiddruck kleiner als die Schliesskraft des Federelements ist. Das erste Ende des Federelements ist mit dem Ventilkörper verbunden. Die Hülse weist ein erstes Mantelelement auf, welches zur Aufnahme im Kanal bestimmt ist. Die Hülse weist ein zweites Mantelelement auf, welches zur Aufnahme des zweiten Endes des Federelements bestimmt ist. Das Federelement ist in einer topfförmigen Ausnehmung des zweiten Mantelelements gehalten. Das heisst, dass das Federelement sich innerhalb des Mantels der topfförmigen Ausnehmung befindet. Hierdurch kann das Federelement entlang der Innenwand des Mantels der topfförmigen Ausnehmung geführt werden, sodass ein sich entlang fast der gesamten Länge des Federelements erstreckender Führungszapfen nicht erforderlich ist, wie er beispielsweise in der US2005061372 A1 gezeigt ist. An der in der US2005061372 A1 dargestellten Lösung ist somit nachteilig, dass der dort gezeigte kugelförmige Ventilkörper nur um einen geringen Betrag von dem Ventilsitz abheben kann, wodurch nur ein kleiner Durchflussquerschnitt zwischen Ventilkörper und Ventilsitz freigebbar ist, sodass auch der Druckverlust für den in der US2005061372 A1 nach Art eines Rückschlagventils wirkenden Druckreglers um ein Vielfaches grösser ist, als für ein Rückschlagventil gemäss eines der erfindungsgemässen Ausführungsbeispiele. Alternative Lösungen für ein Rückschlagventil, welches ein Federelement aufweist, das in der Ausnehmung des zweiten Mantelelements gehalten ist, finden sich in der DE 10 2009 043 649 A1 sowie der DE 10 2012 207 334 A1.

Nach einem Ausführungsbeispiel weist das erste Mantelelement einen Aussendurchmesser auf, welcher im Wesentlichen dem Innendurchmesser des Kanals entspricht. Das zweite Mantelelement kann einen maximalen Aussendurchmesser aufweisen, der kleiner als der maximale Aussendurchmesser des ersten Mantelelements ist. Der Aussendurchmesser der topfförmigen Ausnehmung kann kleiner sein als der maximale Aussendurchmesser.

Das zweite Mantelelement weist nach einem Ausführungsbeispiel einen ersten zylinderförmigen Abschnitt und einen zweiten zylinderförmigen Abschnitt auf, wobei der zweite zylinderförmige Abschnitt als ein Mantelelement der topfförmigen Ausnehmung ausgebildet ist. Der erste zylinderförmige Abschnitt kann einen Inndurchmesser aufweisen, der mindestens dem Aussendurchmesser des Ventilkörpers entspricht. Die Hülse kann eine Öffnung enthalten, die im zweiten Mantelelement angeordnet ist.

Die Hülse enthält ein Verbindungselement, welches das erste Mantelelement mit dem zweiten Mantelelement verbindet.

Nach einem Ausführungsbeispiel kann der Ventilkörper als ein kugelförmiger Ventilkörper ausgebildet sein. Insbesondere kann der Ventilkörper eine Ausnehmung zur Aufnahme des ersten Endes des Federelements aufweisen.

Nach einem Ausführungsbeispiel ist das zweite Mantelelement im ersten Mantelelement aufgenommen. Das Verbindungselement kann ein Ende des ersten Mantelelements mit einem Ende des zweiten Mantelelements verbinden. Das Verbindungselement kann zwischen dem Ende des ersten Mantelelements und dem Ende des zweiten Mantelelements einen Absatz aufweisen. Der Absatz des Verbindungselements kann auf einen Absatz des Ventilsitzelements aufgesetzt werden oder in einer Ausnehmung oder Nut des Ventilsitzelements aufgenommen sein. Der Absatz des Verbindungselements ermöglicht eine Positionierung der Hülse bei der Montage des Rückschlagventils.

Nach einem Ausführungsbeispiel ist das Verbindungselement zwischen dem ersten Mantelelement und dem zweiten Mantelelement angeordnet. Das Ventilsitzelement kann innerhalb des ersten Mantelelements angeordnet sein und auf dem Verbindungselement positioniert werden. Gemäss diesem Ausführungsbeispiel ist es möglich, das Ventilsitzelement bei der Montage des Rückschlagventils auf dem Ventilkörper zu positionieren, sodass der Ventilkörper verliersicher im zweiten Mantelelement gehalten werden kann.

Insbesondere sind nach jedem der vorhergehenden Ausführungsbeispiele die Hülse, das erste Mantelelement sowie das zweite Mantelelement als ein einziges Bauteil ausgebildet. Die Führung des Federelements sowie die Befestigung des Rückschlagventils im Kanal und die Verbindung mit dem Ventilsitzelement können somit durch ein einziges Bauteil, nämlich die Hülse, erreicht werden. Die Hülse kann beispielsweise mittels eines Spannelements im Kanal gehalten werden, alternativ oder in Kombination hierzu könnte sie auch durch einen Presssitz oder durch eine Schraubverbindung im Kanal gehalten werden.

Ein Vorteil der erfindungsgemässen Lösung insbesondere gemäss jedes der Ausführungsbeispiele besteht darin, dass der Einbau in den vom Fluid durchströmten Kanal in einem einzigen Arbeitsschritt vorgenommen werden kann, da das Rückschlagventil vormontiert in den Kanal eingeschoben werden kann, bis es auf einem in dem Kanal befindlichen Absatz aufliegt. Durch den im Kanal angeordneten Absatz ist die exakte Position des Rückschlagventils im Kanal festgelegt. Der Absatz des Kanals nimmt nach einem Ausführungsbeispiel das Ventilsitzelement auf, nach einem weiteren Ausführungsbeispiel das Verbindungselement der Hülse.

Nach einem Ausführungsbeispiel ist zwischen dem Ventilsitzelement und der Hülse ein Hohlraum angeordnet. Durch diesen Hohlraum ist es möglich, dass das Rückschlagventil schneller öffnet. Sobald die Bohrung im Ventilsitzelement geöffnet wird, kann das Fluid in den Hohlraum einströmen. Der Hohlraum erstreckt sich vorteilhafterweise über den gesamten Kanalquerschnitt abzüglich der Wandstärke der Hülse an dieser Stelle. Somit steht beim Abheben des Ventilkörpers sofort ein grosser Fluidquerschnitt zur Verfügung.

Insbesondere kann der Hohlraum mit einer Mehrzahl von Öffnungen verbunden sein. Vom Hohlraum kann somit das Fluid ungehindert in die Öffnungen strömen, sodass ein geringerer Durchflusswiderstand und somit ein überraschend geringer Druckverlust im Vergleich zu herkömmlichen Ventilen erhältlich ist.

Insbesondere ist die Bohrung des Ventilsitzelements mit dem Hohlraum verbunden, wenn der Ventilkörper die Bohrung nicht verschliesst. Daher wird ein unmittelbares Einströmen des Fluids in den Hohlraum ermöglicht, wodurch das erfindungsgemässe Rückschlagventil unmittelbar nach dem Abheben des Ventilkörpers von der Bohrung von einer grösseren Durchflussmenge durchströmt werden kann, als die herkömmlichen Rückschlagventile.

Dieser Vorteil ist insbesondere auch dadurch ermöglicht, dass die Querschnittsfläche des Hohlraums grösser als die Querschnittsfläche der Bohrung sein kann. Insbesondere kann die Querschnittsfläche des Hohlraums sich um mehr als 20% von der Querschnittsfläche der Bohrung unterscheiden. Nach einer besonders vorteilhaften Ausführungsform unterscheidet sich die Querschnittsfläche des Hohlraums um mehr als 30% von die Querschnittsfläche der Bohrung, das heisst, die Querschnittsfläche des Hohlraums ist mindestens 30% grösser als die Querschnittsfläche der Bohrung. Insbesondere kann die Querschnittsfläche des Hohlraums sich um mindestens 50% von der Querschnittsfläche der Bohrung unterscheiden. Das heisst, die Querschnittsfläche des Hohlraums ist gemäss diesem besonders bevorzugten Ausführungsbeispiel mindestens 50% grösser als die Querschnittsfläche der Bohrung.

Das zweite Mantelelement und das Verbindungselement weisen einen ersten zylinderförmigen Abschnitt und einen zweiten zylinderförmigen Abschnitt auf, wobei der erste zylinderförmige Abschnitt eine zentrale Bohrung für die Aufnahme des Ventilkörpers ausbildet. Der Innendurchmesser des zweiten zylinderförmigen Abschnitts ist kleiner als der Innendurchmesser des ersten zylinderförmigen Abschnitts. Hierdurch ist eine exakte Führung sowohl des Federelements als auch des Ventilkörpers ermöglicht.

Zwischen dem ersten zylinderförmigen Abschnitt und dem zweiten zylinderförmigen Abschnitt ist ein konisches Übergangsstück ausgebildet. Die Innenfläche des konischen Übergangsstücks dient als Auflagefläche für den Ventilkörper, wenn sich der Ventilkörper in der Öffnungsposition befindet. Durch die Verwendung eines konischen Übergangsstücks wird eine selbstzentrierende Auflagefläche für den Ventilkörper geschaffen. Zudem wird eine zumindest linienförmige Berührung ermöglicht, sodass die Druck- und Stosskräfte, die vom Ventilkörper auf die Auflagefläche wirken, optimal verteilt werden, wodurch es zu keinem Verschleiss an der Auflagefläche kommen kann.

Nach einem Ausführungsbeispiel enthält das zweite Mantelelement oder das Verbindungselement eine Mehrzahl von Öffnungen, sodass das Fluid schnell aus dem Hohlraum abströmen kann.

Nach einem Ausführungsbeispiel enthält zweite Mantelelement eine topfförmige Ausnehmung, welche eine axialsymmetrische Öffnung enthalten kann. Insbesondere kann die axialsymmetrische Öffnung einen Durchmesser aufweisen, der kleiner als der Innendurchmesser des Federelements ist.

Ein Rückschlagventil nach einem der vorhergehenden Ausführungsbeispiele kann in einem beliebigen System zur Leitung von Fluiden verwendet werden. Insbesondere kann ein Rückschlagventil in Fluidfördersystemen verwendet werden, beispielsweise in Systemen, die eine Pumpe enthalten oder in Systemen, in welchen ein Fluiddruck aufgebaut werden soll. Ein derartiges Rückschlagventil kann auch als Überdruckventil verwendet werden. Das Rückschlagventil kann beispielsweise als Hydraulikventil zum Einsatz kommen. Weitere Einsatzmöglichkeiten eines derartigen Rückschlagventils finden sich im Betrieb von Brennkraftmaschinen, insbesondere in der Versorgung derselben mit Kühlflüssigkeiten, Schmiermitteln oder Brennstoffen.

Nachfolgend wird das erfindungsgemässe Rückschlagventil anhand einiger Ausführungsbeispiele dargestellt. Es zeigen
Fig. 1 einen Axialschnitt durch ein Rückschlagventil nach einem ersten Ausführungsbeispiel,
Fig. 2 einen Radialschnitt durch das Rückschlagventil nach dem ersten Ausführungsbeispiel entlang der Schnittlinie A-A,
Fig. 3 einen Radialschnitt durch das Rückschlagventil nach dem ersten Ausführungsbeispiel entlang der Schnittlinie B-B,
Fig. 4 einen Radialschnitt durch das Rückschlagventil nach dem ersten Ausführungsbeispiel entlang der Schnittlinie C-C,
Fig. 5 einen Axialschnitt durch ein Rückschlagventil nach einem zweiten Ausführungsbeispiel,
Fig. 6 einen Radialschnitt durch das Rückschlagventil nach dem zweiten Ausführungsbeispiel entlang der Schnittlinie A-A,
Fig. 7 einen Radialschnitt durch das Rückschlagventil nach dem zweiten Ausführungsbeispiel entlang der Schnittlinie B-B,
Fig. 8 einen Radialschnitt durch das Rückschlagventil nach dem zweiten Ausführungsbeispiel entlang der Schnittlinie C-C,
Fig. 9 einen Axialschnitt eines Rückschlagventils nach einem dritten Ausführungsbeispiel,
Fig. 10 einen Axialschnitt durch ein Rückschlagventil nach einem vierten Ausführungsbeispiel,
Fig. 11 eine Ansicht auf das Rückschlagventil nach dem vierten Ausführungsbeispiel,
Fig. 12 einen Axialschnitt durch ein Rückschlagventil nach einem fünften Ausführungsbeispiel,
Fig. 13 eine Ansicht auf das Rückschlagventil nach dem fünften Ausführungsbeispiel.

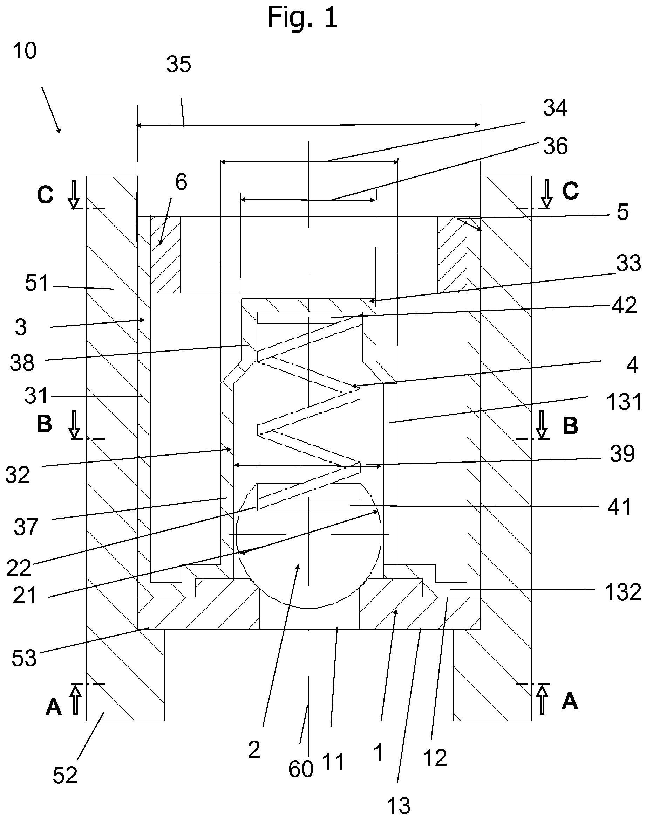

Fig. 1 zeigt eine erste Ansicht eines Rückschlagventils 10 nach einem ersten Ausführungsbeispiel in einer teilweise geschnittenen Ansicht. Das Rückschlagventil 10 ist zur Aufnahme in einem von einem Fluid durchströmbaren Kanal 5 bestimmt. Der Kanal 5 weist einen ersten Kanalabschnitt 51 und einen zweiten Kanalabschnitt 52 auf. Zwischen dem ersten Kanalabschnitt 51 und dem zweiten Kanalabschnitt 52 ist ein Absatz 53 angeordnet. Der Innendurchmesser des ersten Kanalabschnitts 51 unterscheidet sich vom Innendurchmesser des zweiten Kanalabschnitts 52. Das Rückschlagventil 10 umfasst ein Ventilsitzelement 1 einen Ventilkörper 2, sowie eine Hülse 3. Der Ventilkörper 2 ist in der Hülse 3 derart bewegbar, dass er in einer ersten Position auf dem Ventilsitzelement 1 aufliegt und in einer zweiten Position in einem Abstand vom Ventilsitzelement 1 angeordnet ist. Das Ventilsitzelement 1 weist eine Bohrung 11 auf, die vom Ventilkörper 2 in der ersten Position verschliessbar ist. Zwischen dem Ventilkörper 2 und der Hülse 3 ist ein Federelement 4 angeordnet. Das Federelement weist ein erstes Ende 41 und ein zweites Ende 42 auf. Der Ventilkörper 2 ist durch das Federelement 4 in der ersten Position gehalten, solange der in der Bohrung anliegende Fluiddruck kleiner als die Schliesskraft des Federelements 4 ist. Das erste Ende 41 des Federelements 4 ist mit dem Ventilkörper 2 verbunden. Die Hülse 3 weist ein erstes Mantelelement 31 auf, welches zur Aufnahme im Kanal 5 bestimmt ist. Das Mantelelement 31 liegt gemäss diesem Ausführungsbeispiel an der Innenwand des ersten Abschnitts 51 des Kanals 5 an. Das erste Mantelelement 31 weist insbesondere einen Aussendurchmesser 35 auf, welcher im Wesentlichen dem Innendurchmesser des ersten Abschnitts 51 des Kanals 5 entspricht.

Die Hülse 3 weist ein zweites Mantelelement 32 auf, welches zur Aufnahme des zweiten Endes 42 des Federelements 4 bestimmt ist. Das zweite Ende 42 des Federelements 4 ist in einer topfförmigen Ausnehmung 33 des zweiten Mantelelements 32 gehalten. Das zweite Mantelelement 32 bildet somit einen Käfig aus, in welchem der Ventilkörper 2 bewegbar ist. Das erste Mantelelement 31 kann über ein Verbindungselement 132 mit dem zweiten Mantelelement 32 verbunden sein. Das Verbindungselement 132 kann auf einer ersten Oberfläche 12 des Ventilsitzelementelements 1 angeordnet sein. Das Ventilsitzelement 1 weist eine der ersten Oberfläche 12 gegenüberliegende zweite Oberfläche 13 auf. Die zweite Oberfläche 13 liegt teilweise auf dem Absatz 53 auf.

Das zweite Mantelelement 32 kann einen maximalen Aussendurchmesser 34 aufweisen, der kleiner als der maximale Aussendurchmesser 35 des ersten Mantelelements 31 ist. Der Aussendurchmesser 36 der topfförmigen Ausnehmung 33 ist insbesondere kleiner als der maximale Aussendurchmesser 35.

Das zweite Mantelelement 32 weist nach dem Ausführungsbeispiel gemäss Fig. 1 einen ersten zylinderförmigen Abschnitt 37 und einen zweiten zylinderförmigen Abschnitt 38 auf. Der erste zylinderförmige Abschnitt 37 kann eine Mehrzahl von strebenförmigen Elementen enthalten, die mindestens eine Öffnung 131 seitlich begrenzen. Gemäss dem vorliegenden Ausführungsbeispiel sind drei Öffnungen 131 vorgesehen. Die Öffnungen 131 sind insbesondere von gleicher Grösse, sodass ein Fluid die Öffnungen 131 durchströmen kann, wenn der Ventilkörper 2 vom Ventilsitzelement 1 getrennt ist. Wenn der Ventilkörper 2 durch den Druck des einströmenden Fluids vom Ventilsitzelement 1 abgehoben wird, wird das Federelement 4 zusammengedrückt. Der Ventilkörper 2 wird im zweiten Mantelelement 32 geführt. Der Ventilkörper 2 ist insbesondere als ein kugelförmiger Ventilkörper ausgebildet. Das erste Ende 41 des Federelements 4 ist in einer Ausnehmung 22 des Ventilkörpers 2 gehalten. Gemäss eines nicht dargestellten Ausführungsbeispiels kann das erste Ende 41 des Federelements 4 auch auf der Oberfläche des Ventilkörpers 2 aufliegen.

Die Hülse 3 enthält ein Verbindungselement 132, welches das erste Mantelelement 31 mit dem zweiten Mantelelement 32 verbindet.

Der zylinderförmige Abschnitt 38 ist insbesondere als ein Mantelelement der topfförmigen Ausnehmung 33 ausgebildet. Die topfförmige Ausnehmung kann durch ein nicht dargestelltes Ausführungsbeispiel aus einer Mehrzahl von strebenförmigen Elementen gebildet sein, welche sich vom Verbindungselement 132 bis zum Ende der topfförmigen Ausnehmung 33 erstrecken.

Der erste zylinderförmige Abschnitt 37 weist gemäss diesem Ausführungsbeispiel einen Innendurchmesser 39 auf, der mindestens dem Aussendurchmesser 21 des Ventilkörpers 2 entspricht.

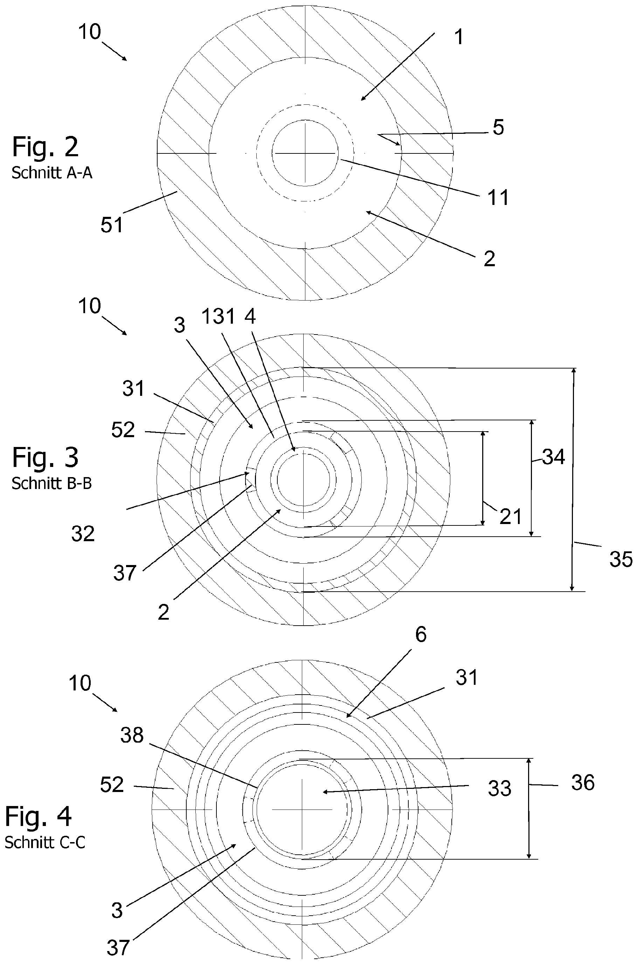

Fig. 2 zeigt einen Radialschnitt durch das Rückschlagventil nach dem ersten Ausführungsbeispiel entlang der Schnittlinie A-A. Die Blickrichtung ist in der Strömungsrichtung des Fluids gewählt. Der Kanal 5 enthält das Ventilsitzelement 1, das als ringförmiges Scheibenelement ausgebildet ist. Das ringförmige Scheibenelement enthält eine mittige Bohrung 11, die sich entlang der Mittenachse 60 des Kanals 5 erstreckt. Durch diese Bohrung gelangt das Fluid auf die Oberfläche des die Bohrung 11 normalerweise verschliessenden Ventilkörpers 2. Bei genügendem Fluiddruck wird der Ventilkörper 2 von der Bohrung 11 abgehoben, sodass sich ein ringförmiger Spalt ausbildet, durch welchen das Fluid in den Zwischenraum zwischen dem ersten Mantelelement 31 und dem zweiten Mantelelement 32 einströmen kann, siehe hierzu Fig. 1. Der Umriss des Ventilkörpers 2 ist in Fig. 2 mit strichlierter Linie gezeigt, da der Ventilkörper 2 durch das Ventilsitzelement 1 teilweise verdeckt ist.

Fig. 3 zeigt einen Radialschnitt durch ein Rückschlagventil 10 nach dem ersten Ausführungsbeispiel entlang der Schnittlinie B-B mit der Blickrichtung entgegen der Strömungsrichtung des Fluids. In dem Kanal 5 ist die Hülse 3 angeordnet, deren erstes Mantelelement 31 an der Innenwand des Kanals 5 anliegt. In Fig. 3 ist der zweite Abschnitt 52 des Kanals 5 geschnitten gezeigt, der einen grösseren Innendurchmesser aufweist, als der in Fig. 2 dargestellte erste Abschnitt 51 des Kanals 5. Das zweite Mantelelement 32 der Hülse 3 besteht an der Stelle, in welcher der Schnitt gelegt ist, aus drei strebenförmigen Elementen, zwischen denen je eine Öffnung 131 ausgebildet ist. Im Inneren des zweiten Mantelelements 32 befindet sich das Federelement 4, welches auf dem Ventilkörper 2 aufliegt oder in einer Ausnehmung desselben aufgenommen ist.

Fig. 4 zeigt einen Radialschnitt durch ein Rückschlagventil 10 nach dem ersten Ausführungsbeispiel entlang der Schnittlinie C-C mit der Blickrichtung entgegen der Strömungsrichtung des Fluids. Das erste Mantelelement 31 der Hülse 3 ist durch ein Spannelement 6 im zweiten Abschnitt 52 des Kanals 5 gehalten. Durch das Spannelement 6 kann das erste Mantelelement 31 gegen die Innenwand des zweiten Abschnitts 52 des Kanals 5 gepresst werden, sodass das Rückschlagventil 10 im Kanal 5 in der vorgesehenen Einbauposition gehalten ist. Anstelle eines Spannelements kann auch ein Presssitz oder eine Schraubverbindung vorgesehen sein.

In Fig. 4 ist auch die Abdeckung der topfförmigen Ausnehmung 33 gezeigt, in welcher das zweite Ende 42 des Federelements 4 aufgenommen ist, welches durch die Abdeckung verdeckt ist. An die Abdeckung der topfförmigen Ausnehmung 33 schliesst der zweite zylinderförmige Abschnitt 38 des zweiten Mantelelements 32 an. Der Aussendurchmesser 36 des zweiten zylinderförmigen Abschnitts 38 ist in Fig. 4 dargestellt.

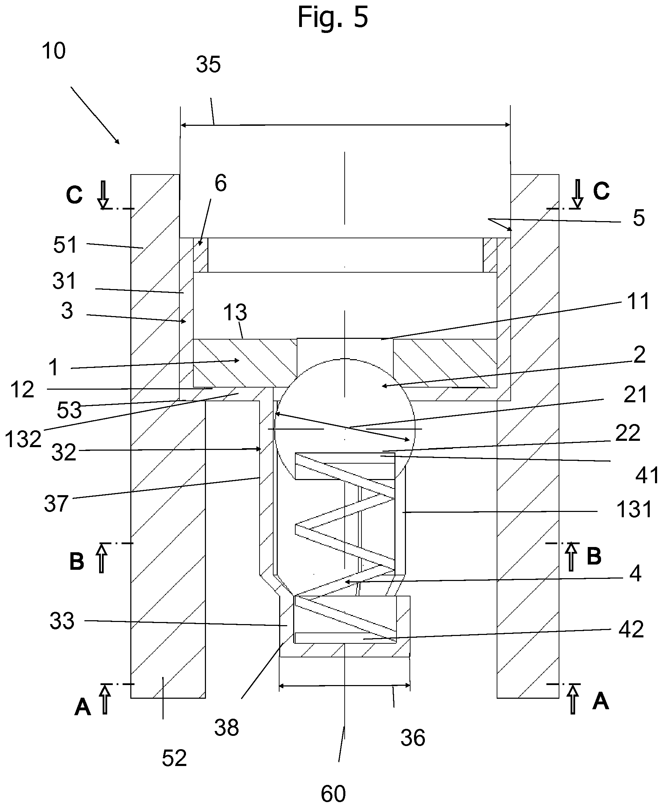

Fig. 5 zeigt eine erste Ansicht eines Rückschlagventils 10 nach einem zweiten Ausführungsbeispiel in einem Axialschnitt. Gleiche oder gleichwirkende Elemente tragen in dieser Darstellung dieselben Bezugszeichen wie in dem in Fig. 1-4 dargestellten Ausführungsbeispiel Das Rückschlagventil 10 ist zur Aufnahme in einem von einem Fluid durchströmbaren Kanal 5 bestimmt. Der Kanal 5 weist einen ersten Kanalabschnitt 51 und einen zweiten Kanalabschnitt 52 auf. Zwischen dem ersten Kanalabschnitt 51 und dem zweiten Kanalabschnitt 52 ist ein Absatz 53 angeordnet. Der Innendurchmesser des ersten Kanalabschnitts 51 unterscheidet sich vom Innendurchmesser des zweiten Kanalabschnitts 52. Das Rückschlagventil 10 umfasst ein Ventilsitzelement 1 einen Ventilkörper 2, sowie eine Hülse 3. Der Ventilkörper 2 ist in der Hülse 3 derart bewegbar, dass er in einer ersten Position auf dem Ventilsitzelement 1 aufliegt und in einer zweiten Position in einem Abstand vom Ventilsitzelement 1 angeordnet ist. Das Ventilsitzelement 1 weist eine Bohrung 11 auf, die vom Ventilkörper 2 in der ersten Position verschliessbar ist. Zwischen dem Ventilkörper 2 und der Hülse 3 ist ein Federelement 4 angeordnet. Das Federelement weist ein erstes Ende 41 und ein zweites Ende 42 auf. Der Ventilkörper 2 ist durch das Federelement 4 in der ersten Position gehalten, solange der in der Bohrung anliegende Fluiddruck kleiner als die Schliesskraft des Federelements 4 ist. Das erste Ende 41 des Federelements 4 ist mit dem Ventilkörper 2 verbunden. Die Hülse 3 weist ein erstes Mantelelement 31 auf, welches zur Aufnahme im Kanal 5 bestimmt ist. Das Mantelelement 31 liegt an der Innenwand des ersten Abschnitts 51 des Kanals 5 an. Das erste Mantelelement 31 weist insbesondere einen Aussendurchmesser 35 auf, welcher im Wesentlichen dem Innendurchmesser des ersten Abschnitts 51 des Kanals 5 entspricht.

Die Hülse 3 weist ein zweites Mantelelement 32 auf, welches zur Aufnahme des zweiten Endes 42 des Federelements 4 bestimmt ist. Das zweite Ende 42 des Federelements 4 ist in einer topfförmigen Ausnehmung 33 des zweiten Mantelelements 32 gehalten. Das zweite Mantelelement 32 bildet somit einen Käfig aus, in welchem der Ventilkörper 2 bewegbar ist. Das erste Mantelelement 31 kann über ein Verbindungselement 132 mit dem zweiten Mantelelement 32 verbunden sein. Das Verbindungselement 132 kann auf einer ersten Oberfläche 12 des Ventilsitzelements 1 angeordnet sein. Das Ventilsitzelement 1 weist eine der ersten Oberfläche 12 gegenüberliegende zweite Oberfläche 13 auf. Die erste Oberfläche 12 liegt auf dem Verbindungselement 132 auf und ist in dem ersten Mantelelement 31 der Hülse 3 aufgenommen. Das Verbindungselement 132 liegt auf der dem Ventilsitzelement 1 gegenüberliegenden Seite teilweise auf dem Absatz 53 auf.

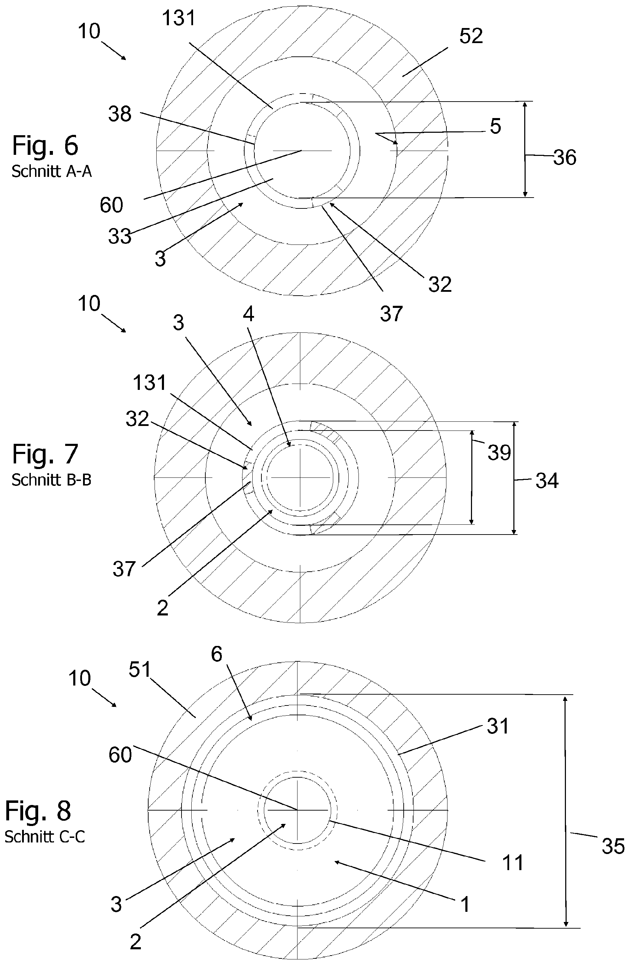

Das zweite Mantelelement 32 kann einen maximalen Aussendurchmesser 34 (siehe Fig. 7) aufweisen, der kleiner als der maximale Aussendurchmesser 35 des ersten Mantelelements 31 ist. Der Aussendurchmesser 36 (siehe Fig. 6) der topfförmigen Ausnehmung 33 ist insbesondere kleiner als der maximale Aussendurchmesser 35.

Das zweite Mantelelement 32 weist nach dem Ausführungsbeispiel gemäss Fig. 5 einen ersten zylinderförmigen Abschnitt 37 und einen zweiten zylinderförmigen Abschnitt 38 auf. Der erste zylinderförmige Abschnitt 37 kann eine Mehrzahl von strebenförmigen Elementen enthalten, die mindestens eine Öffnung 131 seitlich begrenzen. Gemäss dem vorliegenden Ausführungsbeispiel sind drei Öffnungen 131 vorgesehen. Die Öffnungen 131 sind insbesondere von gleicher Grösse, sodass ein Fluid die Öffnungen 131 durchströmen kann, wenn der Ventilkörper 2 vom Ventilsitzelement 1 getrennt ist. Wenn der Ventilkörper 2 durch den Druck des einströmenden Fluids vom Ventilsitzelement 1 abgehoben wird, wird das Federelement 4 zusammengedrückt. Der Ventilkörper 2 wird im zweiten Mantelelement 32 geführt. Der Ventilkörper 2 ist insbesondere als ein kugelförmiger Ventilkörper ausgebildet. Das erste Ende 41 des Federelements 4 ist in einer Ausnehmung 22 des Ventilkörpers 2 gehalten. Gemäss einem nicht dargestellten Ausführungsbeispiel kann das erste Ende 41 des Federelements 4 auch auf der Oberfläche des Ventilkörpers 2 aufliegen.

Die Hülse 3 enthält ein Verbindungselement 132, welches das erste Mantelelement 31 mit dem zweiten Mantelelement 32 verbindet. Die Strömung des Fluids erfolgt im Kanal 5 vom ersten Abschnitt 51 zum zweiten Abschnitt 52, in der Zeichnung nach unten. Das erste Mantelelement 31 erstreckt sich gemäss diesem Ausführungsbeispiel stromaufwärts des Verbindungselements 132. Das Ventilsitzelement 1 ist innerhalb des ersten Mantelelements 31 angeordnet und liegt auf dem Verbindungselement 132 auf.

Das zweite Mantelelement 32 erstreckt sich stromabwärts des Verbindungselements 132. Der zylinderförmige Abschnitt 38 des zweiten Mantelelements 32 ist insbesondere als ein Mantelelement der topfförmigen Ausnehmung 33 ausgebildet. Die topfförmige Ausnehmung 33 kann durch ein nicht dargestelltes Ausführungsbeispiel aus einer Mehrzahl von strebenförmigen Elementen gebildet sein, welche sich vom Verbindungselement 132 bis zum Ende der topfförmigen Ausnehmung 33 erstrecken. Der erste zylinderförmige Abschnitt 37 weist gemäss diesem Ausführungsbeispiel einen Innendurchmesser 39 (siehe Fig. 7) auf, der mindestens dem Aussendurchmesser 21 des Ventilkörpers 2 entspricht.

Fig. 6 zeigt einen Radialschnitt durch das Rückschlagventil 10 nach dem zweiten Ausführungsbeispiel entlang der Schnittlinie A-A. Die Blickrichtung ist entgegen der Strömungsrichtung des Fluids gewählt. In Fig. 6 ist der zweite Abschnitt 52 des Kanals 5 geschnitten gezeigt, der einen kleineren Innendurchmesser aufweist, als der in Fig. 5 oder Fig. 8 dargestellte erste Abschnitt 51 des Kanals 5. Das zweite Mantelelement 32 der Hülse 3 besteht an der Stelle, in welcher der Schnitt gelegt ist, aus drei strebenförmigen Elementen, zwischen denen je eine Öffnung 131 ausgebildet ist. Im Inneren des zweiten Mantelelements 32 befindet sich das Federelement 4, welches auf dem Ventilkörper 2 aufliegt oder in einer Ausnehmung desselben aufgenommen ist Das Federelement 4 ist in dieser Darstellung nicht sichtbar, da es durch die Abdeckung der topfförmigen Ausnehmung 33 verdeckt ist. An die Abdeckung der topfförmigen Ausnehmung 33 schliesst der zweite zylinderförmige Abschnitt 38 des zweiten Mantelelements 32 an. Der Aussendurchmesser 36 des zweiten zylinderförmigen Abschnitts 38 ist in Fig. 6 dargestellt.

Fig. 7 zeigt einen Radialschnitt durch ein Rückschlagventil 10 nach dem zweiten Ausführungsbeispiel entlang der Schnittlinie B-B mit der Blickrichtung entgegen der Strömungsrichtung des Fluids. In Fig. 7 ist die Abdeckung der topfförmigen Ausnehmung 33 nicht gezeigt, da sie vor der Schnittebene gelegen ist. Das zweite Mantelelement 32 der Hülse 3 besteht an der Stelle, in welcher der Schnitt gelegt ist, aus drei strebenförmigen Elementen, zwischen denen je eine Öffnung 131 ausgebildet ist. Im Inneren des zweiten Mantelelements 32 befindet sich das Federelement 4, welches auf dem Ventilkörper 2 aufliegt oder in einer Ausnehmung desselben aufgenommen ist. Der erste zylinderförmige Abschnitt 37 hat gemäss Fig. 7 den Aussendurchmesser 34 und den Innendurchmesser 39. Der Aussendurchmesser 21 (siehe Fig. 5) des Ventilkörpers 2 ist kleiner oder gleich dem Innendurchmesser 39, sodass der Ventilkörper 2 innerhalb des zylinderförmigen Abschnitts 37 des zweiten Mantelelements 32 bewegbar ist.

Fig. 8 zeigt einen Radialschnitt durch ein Rückschlagventil 10 nach dem zweiten Ausführungsbeispiel entlang der Schnittlinie C-C mit der Blickrichtung in der Strömungsrichtung des Fluids. In dem Kanal 5 ist die Hülse 3 angeordnet, deren erstes Mantelelement 31 an der Innenwand des Kanals 5 anliegt. Das erste Mantelelement 31 der Hülse 3 ist durch ein Spannelement 6 im ersten Abschnitt 51 des Kanals 5 gehalten. Durch das Spannelement 6 kann das erste Mantelelement 31 gegen die Innenwand des ersten Abschnitts 51 des Kanals 5 gepresst werden, sodass das Rückschlagventil 10 im Kanal 5 in der vorgesehenen Einbauposition gehalten ist. Das in Fig. 8 dargestellte Spannelement 6 kann sich auch bis zur zweiten Oberfläche 13 des Ventilsitzelements 1 erstrecken, sodass das Ventilsitzelement 1 mit seiner ersten Oberfläche 12 aufliegend auf der Oberfläche des Verbindungselements 132 gehalten werden kann, auch wenn zusätzlich zum Druck, der durch das Federelement 4 auf das Ventilsitzelement 1 wirkt, ein Fluiddruck im zweiten Abschnitt 52 des Kanals 5 wirken sollte, der höher als der Fluiddruck im ersten Abschnitt 51 des Kanals 5 ist. Gemäss einem nicht dargestellten Ausführungsbeispiel ist das Spannelement durch das Ventilsitzelement 1 ausgebildet.

Der Kanal 5 enthält die Hülse 3, die das Ventilsitzelement 1 enthält, das als ringförmiges Scheibenelement ausgebildet ist. Das ringförmige Scheibenelement enthält eine mittige Bohrung 11, die sich entlang der Mittenachse 60 des Kanals 5 erstreckt. Durch diese Bohrung 11 gelangt das Fluid auf die Oberfläche des die Bohrung 11 normalerweise verschliessenden Ventilkörpers 2. Bei genügendem Fluiddruck wird der Ventilkörper 2 von der Bohrung 11 abgehoben, sodass sich ein ringförmiger Spalt ausbildet, durch welchen das Fluid in den Zwischenraum zwischen dem zweiten Abschnitt 52 des Kanals 5 und dem zweiten Mantelelement 32 einströmen kann, siehe hierzu Fig. 5. Der Umriss des Ventilkörpers 2 ist in Fig. 8 mit strichlierter Linie gezeigt, da der Ventilkörper 2 durch das Ventilsitzelement 1 teilweise verdeckt ist.

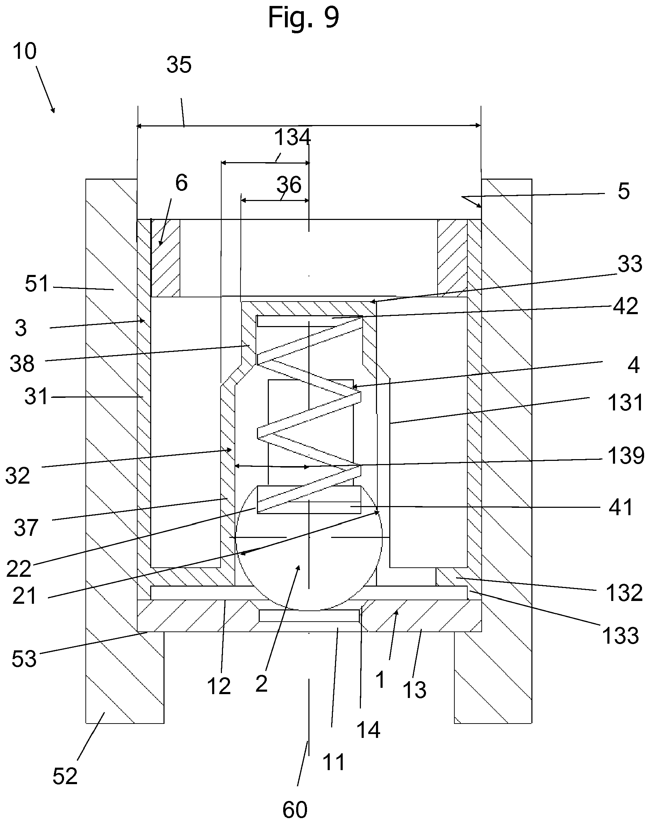

Fig. 9 zeigt einen Axialschnitt eines Rückschlagventils 10 nach einem dritten Ausführungsbeispiel. Gleiche oder gleichwirkende Elemente tragen in dieser Darstellung dieselben Bezugszeichen wie in den in Fig. 1-8 dargestellten Ausführungsbeispielen. Das Rückschlagventil 10 ist zur Aufnahme in einem von einem Fluid durchströmbaren Kanal 5 bestimmt. Der Kanal 5 weist einen ersten Kanalabschnitt 51 und einen zweiten Kanalabschnitt 52 auf. Zwischen dem ersten Kanalabschnitt 51 und dem zweiten Kanalabschnitt 52 ist ein Absatz 53 angeordnet. Der Innendurchmesser des ersten Kanalabschnitts 51 unterscheidet sich vom Innendurchmesser des zweiten Kanalabschnitts 52. Das Rückschlagventil 10 umfasst einen Ventilsitzelement 1 einen Ventilkörper 2, sowie eine Hülse 3. Der Ventilkörper 2 ist in der Hülse 3 derart bewegbar, dass er in einer ersten Position auf dem Ventilsitzelement 1 aufliegt und in einer zweiten Position in einem Abstand vom Ventilsitzelement 1 angeordnet ist. Das Ventilsitzelement 1 weist eine Bohrung 11 auf, die vom Ventilkörper 2 in der ersten Position verschliessbar ist. In Fig. 9 ist der Übergang von der ersten Position in die zweite Position gezeigt, wobei der Ventilkörper 2 durch den Druck des durch die Bohrung 11 einströmenden Fluids vom Ventilsitz 14 des Ventilsitzelements 1 bereits ein Stück entfernt ist. Zwischen dem Ventilkörper 2 und der Hülse 3 ist ein Federelement 4 angeordnet. Das Federelement weist ein erstes Ende 41 und ein zweites Ende 42 auf. Der Ventilkörper 2 ist durch das Federelement 4 in der ersten Position gehalten, solange der in der Bohrung 11 anliegende Fluiddruck kleiner als die Schliesskraft des Federelements 4 ist. Das erste Ende 41 des Federelements 4 ist mit dem Ventilkörper 2 verbunden. Die Hülse 3 weist ein erstes Mantelelement 31 auf, welches zur Aufnahme im Kanal 5 bestimmt ist. Das Mantelelement 31 liegt an der Innenwand des ersten Abschnitts 51 des Kanals 5 an. Das erste Mantelelement 31 weist insbesondere einen Aussendurchmesser 35 auf, welcher im Wesentlichen dem Innendurchmesser des ersten Abschnitts 51 des Kanals 5 entspricht.

Die Hülse 3 weist ein zweites Mantelelement 32 auf, welches zur Aufnahme des zweiten Endes 42 des Federelements 4 bestimmt ist. Das zweite Ende 42 des Federelements 4 ist in einer topfförmigen Ausnehmung 33 des zweiten Mantelelements 32 gehalten. Das zweite Mantelelement 32 bildet somit einen Käfig aus, in welchem der Ventilkörper 2 bewegbar ist. Das erste Mantelelement 31 kann über ein Verbindungselement 132 mit dem zweiten Mantelelement 32 verbunden sein. Das Verbindungselement 132 ist gemäss diesem Ausführungseispiel in einem Abstand zur ersten Oberfläche 12 des Ventilsitzelements 1 angeordnet. Auf der ersten Oberfläche 12 stützt sich ein Fortsatz 133 des ersten Mantelelements 131 ab. Von dem Fortsatz 133, der ersten Oberfläche 12 des Ventilsitzelements 1 sowie dem Verbindungselement 132 wird somit eine Öffnung begrenzt, welche vom Fluid durchströmt wird, sobald der Ventilkörper 2 vom Ventilsitz 14 getrennt wird. Das Fluid kann am Ventilkörper 2 in die Öffnung strömen und gelangt in die Öffnungen 131. Hierdurch wird ein grosser Strömungsquerschnitt bereits bei Eintritt des Fluids in die Öffnungen 131 bereitgestellt, sodass Druckverluste an dieser Stelle nur in sehr geringem Ausmass auftreten. Insbesondere sind die Druckverluste im Vergleich zu den vorhergehenden Ausführungsbeispielen nochmals vermindert. Der Hauptdruckverlust ist durch die Bohrung 11 bedingt, in welcher der Ventilkörper 3 in geschlossenem Zustand gehalten ist.

Das Ventilsitzelement 1 weist eine der ersten Oberfläche 12 gegenüberliegende zweite Oberfläche 13 auf. Die zweite Oberfläche 13 bildet eine der Fluidströmung zugewendete Oberfläche aus. Die Strömungsrichtung ist somit in der Zeichnung von unten nach oben parallel zur Mittenachse 60.

Das zweite Mantelelement 32 kann einen maximalen Aussendurchmesser aufweisen, der kleiner als der maximale Aussendurchmesser 35 des ersten Mantelelements 31 ist. In der vorliegenden Darstellung ist anstelle des Aussendurchmessers der Radius 134 des zweiten Mantelelements gezeigt, da der Durchmesser durch die rechtsseitige Öffnung 131 nicht darstellbar ist. Dasselbe gilt für den Aussendurchmesser 36 (siehe Fig. 1 oder Fig. 6), für den ebenfalls in dieser Darstellung der Radius 136 gezeigt ist, Der Aussendurchmesser 36 (siehe Fig. 6) der topfförmigen Ausnehmung 33 ist auch in diesem Ausführungsbeispiel kleiner als der maximale Aussendurchmesser 35.

Das zweite Mantelelement 32 weist nach dem Ausführungsbeispiel gemäss Fig. 9 einen ersten zylinderförmigen Abschnitt 37 und einen zweiten zylinderförmigen Abschnitt 38 auf. Der erste zylinderförmige Abschnitt 37 kann eine Mehrzahl von strebenförmigen Elementen enthalten, welche die mindestens eine Öffnung 131 seitlich begrenzen. Gemäss dem vorliegenden Ausführungsbeispiel sind drei Öffnungen 131 vorgesehen. Die Öffnungen 131 sind insbesondere von gleicher Grösse, sodass ein Fluid die Öffnungen 131 durchströmen kann, wenn der Ventilkörper 2 vom Ventilsitzelement 1 getrennt ist. Wenn der Ventilkörper 2 durch den Druck des einströmenden Fluids vom Ventilsitzelement 1 abgehoben wird, wird das Federelement 4 zusammengedrückt. Der Ventilkörper 2 wird im zweiten Mantelelement 32 geführt. Der Ventilkörper 2 ist insbesondere als ein kugelförmiger Ventilkörper ausgebildet. Das erste Ende 41 des Federelements 4 ist in einer Ausnehmung 22 des Ventilkörpers 2 gehalten. Nach einem nicht dargestellten Ausführungsbeispiel kann das erste Ende 41 des Federelements 4 auch auf der Oberfläche des Ventilkörpers 2 aufliegen.

Die Strömung des Fluids erfolgt im Kanal 5 vom zweiten Abschnitt 52 zum ersten Abschnitt 51 in der Zeichnung nach oben. Das erste Mantelelement 31 erstreckt sich bis auf den Fortsatz 133 gemäss diesem Ausführungsbeispiel stromabwärts des Verbindungselements 132. Das zweite Mantelelement 32 erstreckt sich stromabwärts des Verbindungselements 132. Der zylinderförmige Abschnitt 38 des zweiten Mantelelements 32 ist insbesondere als ein Mantelelement der topfförmigen Ausnehmung 33 ausgebildet. Die topfförmige Ausnehmung 33 kann durch ein nicht dargestelltes Ausführungsbeispiel aus einer Mehrzahl von strebenförmigen Elementen gebildet sein, welche sich vom Verbindungselement 132 bis zum Ende der topfförmigen Ausnehmung 33 erstrecken. Der erste zylinderförmige Abschnitt 37 weist gemäss diesem Ausführungsbeispiel einen Innendurchmesser 39 (siehe Fig. 1) auf, der mindestens dem Aussendurchmesser 21 des Ventilkörpers 2 entspricht. Anstatt des Innendurchmessers 39 ist in Fig. 9 der Innenradius 139 gezeigt.

Die Hülse 3 enthält das Verbindungselement 132, welches das erste Mantelelement 31 mit dem zweiten Mantelelement 32 verbindet. Insbesondere sind nach jedem der vorhergehenden Ausführungsbeispiele die Hülse 3, das erste Mantelelement 31 sowie das zweite Mantelelement 32 als ein einziges Bauteil ausgebildet. Die Hülse 3 kann zumindest eines der Elemente Kunststoff oder Metall enthalten. Als Kunststoffbauteil kann die Hülse 3 beispielsweise im Spritzgiessverfahren hergestellt sein. Wenn die Hülse 3 aus Metall besteht, kann sie insbesondere durch ein Umformverfahren hergestellt sein, wobei die Öffnungen 131 nach dem Umformen erzeugt werden können. Die Öffnungen können beispielsweise gebohrt, geschnitten, gestanzt oder gefräst werden.

Nach jedem der vorhergehenden Ausführungsbeispiele kann durch das Spannelement 6 ein Verpressen der Hülse 3 derart erfolgen, dass sich die Hülse, also insbesondere die Aussenwand des ersten Mantelelements 31 in der den Abschnitt 51 ausbildenden Bohrung verbeisst. Insbesondere kann die Hülse 3 mindestens einen Vorsprung, beispielsweise eine zahnartige Rille aufweisen. Dieser Vorsprung kann insbesondere an der Aussenwand des ersten Mantelelements 31 angebracht sein, was in den Figuren nicht zeichnerisch dargestellt ist. Das Rückschlagventil kann auch bei Drücken, die mehr als 1000 bar betragen, sicher im Kanal 5 gehalten werden.

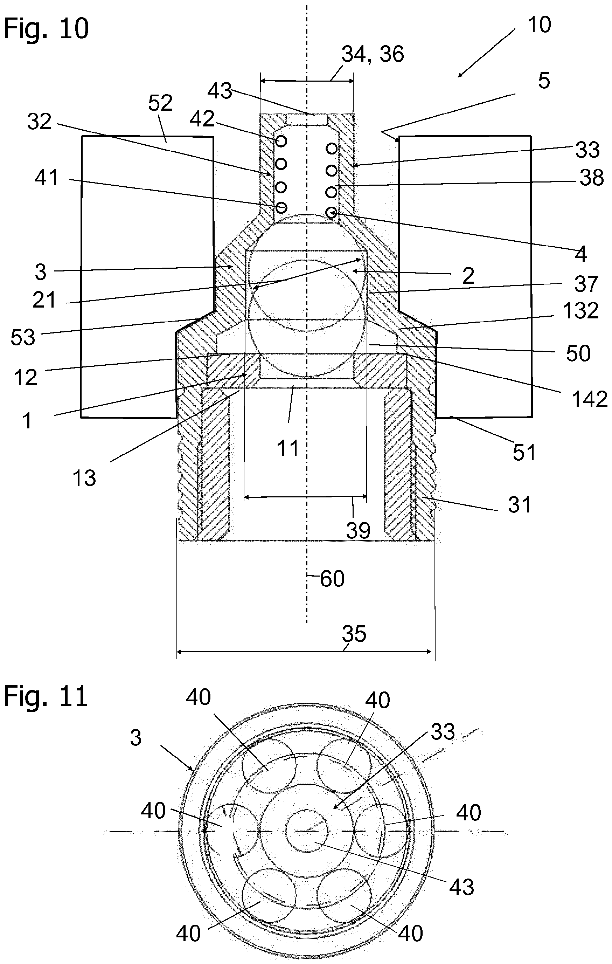

Fig. 10 zeigt einen Längsschnitt eines Rückschlagventils 10 nach einem vierten Ausführungsbeispiel. Das Rückschlagventil 10 ist zur Aufnahme in einem von einem Fluid durchströmbaren Kanal 5 bestimmt. Der Kanal 5 weist einen ersten Kanalabschnitt 51 und einen zweiten Kanalabschnitt 52 auf. Zwischen dem ersten Kanalabschnitt 51 und dem zweiten Kanalabschnitt 52 ist ein Absatz 53 angeordnet. Der Innendurchmesser des ersten Kanalabschnitts 51 unterscheidet sich vom Innendurchmesser des zweiten Kanalabschnitts 52.

Das Rückschlagventil 10 umfasst ein Ventilsitzelement 1, einen Ventilkörper 2, sowie eine Hülse 3. Der Ventilkörper 2 ist in der Hülse 3 derart bewegbar, dass er in einer ersten Position auf dem Ventilsitzelement 1 aufliegt und in einer zweiten Position in einem Abstand vom Ventilsitzelement 1 angeordnet ist. Das Ventilsitzelement 1 weist eine Bohrung 11 auf, die vom Ventilkörper 2 in der ersten Position verschliessbar ist. Zwischen dem Ventilkörper 2 und der Hülse 3 ist ein Federelement 4 angeordnet. Das Federelement 4 weist ein erstes Ende 41 und ein zweites Ende 42 auf. Der Ventilkörper 2 ist durch das Federelement 4 in der ersten Position gehalten, solange der in der Bohrung 11 anliegende Fluiddruck kleiner als die Schliesskraft des Federelements 4 und gegebenenfalls das Eigengewicht des Ventilkörpers 2 ist. In der ersten Position versperrt der Ventilkörper 2 die Bohrung 11, sodass ein Durchtritt eines Fluids verhindert ist. Das erste Ende 41 des Federelements 4 ist mit dem Ventilkörper 2 verbunden. Die Hülse 3 weist ein erstes Mantelelement 31 auf, welches zur Aufnahme im Kanal 5 bestimmt ist. Das Mantelelement 31 weist gemäss diesem Ausführungsbeispiel ein Aussengewinde auf, welches in ein an der Innenwand des ersten Abschnitts 51 des Kanals 5 befindliches Innengewinde eingreifen kann, was zeichnerisch nicht dargestellt ist.

Das erste Mantelelement 31 weist insbesondere einen Aussendurchmesser 35 auf, welcher im Wesentlichen dem Innendurchmesser des ersten Abschnitts 51 des Kanals 5 entspricht.

Die Hülse 3 weist ein zweites Mantelelement 32 auf, welches zur Aufnahme des zweiten Endes 42 des Federelements 4 bestimmt ist. Das zweite Ende 42 des Federelements 4 ist in einer Ausnehmung 33 des zweiten Mantelelements 32 gehalten. Das zweite Mantelelement 32 bildet somit einen Käfig aus, in welchem der das Federelement 4 bewegbar ist. Das erste Mantelelement 31 kann über ein Verbindungselement 132 mit dem zweiten Mantelelement 32 verbunden sein. Das Verbindungselement 132 weist einen Absatz 142 auf, der zur Aufnahme des Ventilsitzelements 1 ausgebildet ist. Das Ventilsitzelement 1 ist als ein ringförmiges Element ausgebildet, welches die Bohrung 11 enthält. Das Ventilsitzelement 1 weist eine der ersten Oberfläche 12 gegenüberliegende zweite Oberfläche 13 auf

Zwischen der ersten Oberfläche 12 des Ventilsitzelements 1 und der gegenüberliegenden Stirnfläche des Verbindungselements 132 ist ein Abstand vorgesehen. Durch diesen Abstand wird zwischen Ventilsitzelement 1 und der Hülse 3, insbesondere dem Verbindungselement 132 ein Hohlraum 50 gebildet, der im Betrieb mit Fluid befüllbar ist.

Das zweite Mantelelement 32 kann einen maximalen Aussendurchmesser 34 aufweisen, der kleiner als der maximale Aussendurchmesser 35 des ersten Mantelelements 31 ist. Der Aussendurchmesser 36 der Ausnehmung 33 ist insbesondere kleiner als der maximale Aussendurchmesser 35.

Das zweite Mantelelement 32 weist nach dem Ausführungsbeispiel gemäss Fig. 10 einen ersten zylinderförmigen Abschnitt 37 und einen zweiten zylinderförmigen Abschnitt 38 auf. An den ersten zylinderförmigen Abschnitt 37 schliesst das Verbindungselement 132 an. Der erste zylinderförmige Abschnitt 37 bildet eine zentrale Bohrung für die Aufnahme des Ventilkörpers 2 aus. Da der Durchmesser des Federelements 4 kleiner als der Durchmesser 21 des Ventilkörpers 2 ist, ist der Innendurchmesser des zweiten zylinderförmigen Abschnitts 38 kleiner als der Innendurchmesser des ersten zylinderförmigen Abschnitts 37. Zwischen der ersten zylinderförmigen Abschnitt 37 und dem zweiten zylinderförmigen Abschnitt 38 ist ein konisches Übergangsstück ausgebildet. Die Innenfläche des konischen Übergangsstücks kann als Auflagefläche für den Ventilkörper 2 dienen, wenn sich der Ventilkörper 2 in der Öffnungsposition befindet. Das Fluid strömt vom Hohlraum 50 an der Unterseite des Ventilkörpers vorbei in die Öffnungen 40, von wo es in den zweiten Abschnitt 52 des Kanals 5 gelangt. Es handelt sich somit um ein Rückschlagventil für eine vorwärts gerichtete Fluidströmung.

Die Hülse 3, insbesondere das Verbindungselement 132, kann eine Mehrzahl von Öffnungen 40 enthalten. Die Öffnungen können im konischen Übergangsstück angeordnet sein, sie können aber auch als Schlitze oder Ausnehmungen in zumindest einem der ersten oder zweiten zylinderförmigen Abschnitte 37, 38 angeordnet sein. Gemäss dem vorliegenden Ausführungsbeispiel sind sechs Öffnungen 40 vorgesehen, was in Fig. 11 sichtbar ist. Die Öffnungen 40 sind insbesondere von gleicher Grösse. Ein Fluid kann die Öffnungen 40 durchströmen, wenn der Ventilkörper 2 vom Ventilsitzelement 1 getrennt ist. Wenn der Ventilkörper 2 durch den Druck des einströmenden Fluids vom Ventilsitzelement 1 abgehoben wird, wird das Federelement 4 zusammengedrückt. Der Ventilkörper 2 wird im ersten zylinderförmigen Abschnitt 37 im zweiten Mantelelement 32 bzw. im Verbindungselement 132 geführt. Der Ventilkörper 2 ist insbesondere als ein kugelförmiger Ventilkörper ausgebildet. Das erste Ende 41 des Federelements 4 liegt auf der Oberfläche des Ventilkörpers 2 auf. Der erste zylinderförmige Abschnitt 37 weist gemäss diesem Ausführungsbeispiel einen Innendurchmesser 39 auf, der mindestens dem Aussendurchmesser 21 des Ventilkörpers 2 entspricht.

Der Hohlraum 50 ist mit einer Mehrzahl von Öffnungen 40 verbunden. Die Bohrung 11 ist mit dem Hohlraum 50 verbunden, wenn der Ventilkörper 2 die Bohrung 11 nicht verschliesst. Ein durch die Bohrung einströmendes Fluid fliesst durch die Bohrung 11 in den Hohlraum 50 und wird durch den Hohlraum 50 zu den Öffnungen 40 geführt, von wo es in den zweiten Abschnitt 52 des Kanals 5 gelangt.

Die Querschnittsfläche des Hohlraums 50 ist grösser als die Querschnittsfläche der Bohrung 11, sodass sich das Fluid schnell im Hohlraum 50 ausbreiten kann. Daher kann das erfindungsgemässe Rückschlagventil überraschenderweise viel schneller vom geschlossenen Zustand in den geöffneten Zustand umschalten als herkömmliche Rückschlagventile. Ein erfindungsgemässes Rückschlagventil weist somit eine wesentlich geringere Reaktionszeit auf als herkömmliche Rückschlagventile, sodass eine wesentlich verkürzte Umschaltphase ermöglicht ist.

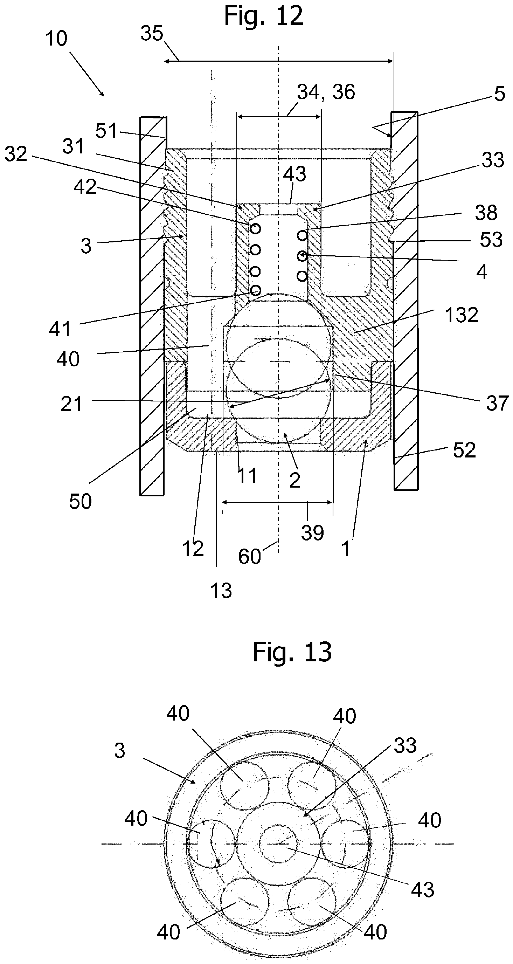

Der zylinderförmige Abschnitt 38 ist insbesondere als ein Mantelelement der Ausnehmung 33 ausgebildet. Die Ausnehmung 33 kann aus einer Mehrzahl von strebenförmigen Elementen gebildet sein, welche sich vom Verbindungselement 132 bis zum Ende der Ausnehmung 33 erstrecken, was in den Zeichnungen nicht dargestellt ist. Die Ausnehmung weist gemäss Fig. 12 einen vom zylinderförmigen Abschnitt 38 begrenzten Boden auf, der eine Öffnung 43 enthält. Diese Öffnung 43 kann insbesondere rotationssymmetrisch um die Mittenachse 60 angeordnet sein.

Fig. 11 zeigt eine Ansicht des Rückschlagventils 10 gemäss Fig. 10 gesehen von der Abströmseite des Ventils, das heisst vom zweiten Abschnitt 52 des Kanals 5. Der Kanal 5 ist in der Fig. 11 weggelassen, Fig. 11 zeigt demzufolge eine Ansicht der Hülse 3.

Fig. 12 zeigt eine erste Ansicht eines Rückschlagventils 10 nach einem fünften Ausführungsbeispiel in einer teilweise geschnittenen Ansicht. Das Rückschlagventil 10 ist zur Aufnahme in einem von einem Fluid durchströmbaren Kanal 5 bestimmt. Der Kanal 5 weist einen ersten Kanalabschnitt 51 und einen zweiten Kanalabschnitt 52 auf. Zwischen dem ersten Kanalabschnitt 51 und dem zweiten Kanalabschnitt 52 ist ein Absatz 53 angeordnet. Der Innendurchmesser des ersten Kanalabschnitts 51 unterscheidet sich vom Innendurchmesser des zweiten Kanalabschnitts 52, was in der vorliegenden Darstellung durch das geschnitten dargestellte Aussengewinde des ersten Mantelelements 31 angedeutet ist. Der Absatz 53 kann durch den Gewindeauslauf gebildet sein.

Das Rückschlagventil 10 umfasst ein Ventilsitzelement 1, einen Ventilkörper 2, sowie eine Hülse 3. Der Ventilkörper 2 ist in der Hülse 3 derart bewegbar, dass er in einer ersten Position auf dem Ventilsitzelement 1 aufliegt und in einer zweiten Position in einem Abstand vom Ventilsitzelement 1 angeordnet ist. Das Ventilsitzelement 1 weist eine Bohrung 11 auf, die vom Ventilkörper 2 in der ersten Position verschliessbar ist. Zwischen dem Ventilkörper 2 und der Hülse 3 ist ein Federelement 4 angeordnet. Das Federelement 4 weist ein erstes Ende 41 und ein zweites Ende 42 auf. Der Ventilkörper 2 ist durch das Federelement 4 in der ersten Position gehalten, solange der in der Bohrung 11 anliegende Fluiddruck kleiner als die Schliesskraft des Federelements 4 und gegebenenfalls das Eigengewicht des Ventilkörpers 2 ist. Das erste Ende 41 des Federelements 4 ist mit dem Ventilkörper 2 verbunden. Die Hülse 3 weist ein erstes Mantelelement 31 auf, welches zur Aufnahme im Kanal 5 bestimmt ist. Das Mantelelement 31 weist gemäss diesem Ausführungsbeispiel ein Aussengewinde auf, welches in ein an der Innenwand des ersten Abschnitts 51 des Kanals 5 befindliches Innengewinde eingreift. Das erste Mantelelement 31 weist insbesondere einen Aussendurchmesser 35 auf, welcher im Wesentlichen dem Innendurchmesser des ersten Abschnitts 51 des Kanals 5 entspricht.

Die Hülse 3 weist ein zweites Mantelelement 32 auf, welches zur Aufnahme des zweiten Endes 42 des Federelements 4 bestimmt ist. Das zweite Ende 42 des Federelements 4 ist in einer Ausnehmung 33 des zweiten Mantelelements 32 gehalten. Das zweite Mantelelement 32 bildet somit einen Käfig aus, in welchem der Ventilkörper 2 bewegbar ist. Das erste Mantelelement 31 kann über ein Verbindungselement 132 mit dem zweiten Mantelelement 32 verbunden sein. Das Verbindungselement 132 weist einen Absatz auf, der zur Aufnahme des Ventilsitzelements 1 ausgebildet ist. Das Ventilsitzelement 1 ist als ein kappenförmiges Element ausgebildet, welches die Bohrung 11 enthält. Das Ventilsitzelement 1 weist einen umlaufenden Rand auf, welcher auf den Absatz des Verbindungselements 132 aufgesteckt oder aufgeschraubt werden kann. Der Rand kann ein Innengewinde enthalten, welches mit einem entsprechenden Aussengewinde des Verbindungselements 132 in Eingriff bringbar ist. Die Verbindung zwischen Rand und Absatz kann auch durch einen Presssitz erhalten werden.

Zwischen der ersten Oberfläche 12 des Ventilsitzelements 1 und der gegenüberliegenden Stirnfläche des Verbindungselements 132 ist ein Abstand vorgesehen. Durch diesen Abstand wird zwischen Ventilsitzelement 1 und der Hülse 3, insbesondere dem Verbindungselement 132 ein Hohlraum gebildet, der im Betrieb mit Fluid befüllbar ist. Das Ventilsitzelement 1 weist eine der ersten Oberfläche 12 gegenüberliegende zweite Oberfläche 13 auf.

Das zweite Mantelelement 32 kann einen maximalen Aussendurchmesser 34 aufweisen, der kleiner als der maximale Aussendurchmesser 35 des ersten Mantelelements 31 ist. Der Aussendurchmesser 36 der Ausnehmung 33 ist insbesondere kleiner als der maximale Aussendurchmesser 35.

Das zweite Mantelelement 32 weist nach dem Ausführungsbeispiel gemäss Fig. 12 einen ersten zylinderförmigen Abschnitt 37 und einen zweiten zylinderförmigen Abschnitt 38 auf. Die Hülse 3 enthält ein Verbindungselement 132, welches das erste Mantelelement 31 mit dem zweiten Mantelelement 32 verbindet. Der erste zylinderförmige Abschnitt 37 ist im Verbindungselement 132 angeordnet. Der erste zylinderförmige Abschnitt 37 bildet eine zentrale Bohrung für die Aufnahme des Ventilkörpers 2 aus. Da der Durchmesser des Federelements 4 kleiner als der Durchmesser 21 des Ventilkörpers 2 ist, ist der Innendurchmesser des zweiten zylinderförmigen Abschnitts 38 kleiner als der Innendurchmesser des ersten zylinderförmigen Abschnitts 37. Zwischen dem ersten zylinderförmigen Abschnitt 37 und dem zweiten zylinderförmigen Abschnitt 38 ist ein konisches Übergangsstück ausgebildet. Die Innenfläche des konischen Übergangsstücks kann als Auflagefläche für den Ventilkörper 2 dienen, wenn sich der Ventilkörper 2 in der Öffnungsposition befindet. Das Fluid strömt vom Hohlraum 50 an der Unterseite des Ventilkörpers vorbei in die Öffnungen 40, von wo es in den ersten Abschnitt 51 des Kanals 5 gelangt. Die Strömungsrichtung des Fluids ist somit der Strömungsrichtung des Fluids in Fig. 10, 11 entgegengesetzt. Es handelt sich somit um ein Rückschlagventil für eine rückwärts gerichtete Fluidströmung.

Die Hülse 3, insbesondere das Verbindungselement 132, kann eine Mehrzahl von Öffnungen 40 enthalten. Gemäss dem vorliegenden Ausführungsbeispiel sind sechs Öffnungen 40 vorgesehen, was in Fig. 13 sichtbar ist. Die Öffnungen 40 sind insbesondere von gleicher Grösse. Ein Fluid kann die Öffnungen 40 durchströmen, wenn der Ventilkörper 2 vom Ventilsitzelement 1 getrennt ist. Wenn der Ventilkörper 2 durch den Druck des einströmenden Fluids vom Ventilsitzelement 1 abgehoben wird, wird das Federelement 4 zusammengedrückt. Der Ventilkörper 2 wird im ersten zylinderförmigen Abschnitt 37 im zweiten Mantelelement 32 bzw. im Verbindungselement 132 geführt. Der Ventilkörper 2 ist insbesondere als ein kugelförmiger Ventilkörper ausgebildet. Das erste Ende 41 des Federelements 4 liegt auf der Oberfläche des Ventilkörpers 2 auf.

Der erste zylinderförmige Abschnitt 37 weist gemäss diesem Ausführungsbeispiel einen Innendurchmesser 39 auf, der mindestens dem Aussendurchmesser 21 des Ventilkörpers 2 entspricht.

Der Hohlraum 50 ist mit einer Mehrzahl von Öffnungen 40 verbunden. Die Bohrung 11 ist mit dem Hohlraum 50 verbunden, wenn der Ventilkörper 2 die Bohrung 11 nicht verschliesst. Ein durch die Bohrung einströmendes Fluid fliesst durch die Bohrung 11 in den Hohlraum 50 und wird durch den Hohlraum 50 zu den Öffnungen 40 geführt, von wo es in den ersten Abschnitt 51 des Kanals 5 gelangt.

Die Querschnittsfläche des Hohlraums 50 ist grösser als die Querschnittsfläche der Bohrung 11, sodass sich das Fluid schnell im Hohlraum ausbreiten kann. Daher kann das erfindungsgemässe Rückschlagventil überraschenderweise viel schneller vom geschlossenen Zustand in den geöffneten Zustand umschalten als herkömmliche Rückschlagventile. Ein erfindungsgemässes Rückschlagventil weist somit eine wesentlich geringere Reaktionszeit auf als herkömmliche Rückschlagventile, sodass eine wesentlich verkürzte Umschaltphase ermöglicht ist.

Der zylinderförmige Abschnitt 38 ist insbesondere als ein Mantelelement der Ausnehmung 33 ausgebildet. Die Ausnehmung 33 kann aus einer Mehrzahl von strebenförmigen Elementen gebildet sein, welche sich vom Verbindungselement 132 bis zum Ende der Ausnehmung 33 erstrecken, was in den Zeichnungen nicht dargestellt ist. Die Ausnehmung weist gemäss Fig. 12 einen vom zylinderförmigen Abschnitt 38 begrenzten Boden auf, der eine Öffnung 43 enthält. Diese Öffnung 43 kann insbesondere rotationssymmetrisch um die Mittenachse 60 angeordnet sein.

Nach einem nicht dargestellten Ausführungsbeispiel kann das zweite Mantelelement 32 auch einen mehreckigen, insbesondere viereckigen Querschnitt aufweisen.

Für den Fachmann ist offensichtlich, dass viele weitere Modifikationen zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C... N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Rückschlagventil (10) zur Aufnahme in einem von einem Fluid durchströmbaren Kanal (5), umfassend ein Ventilsitzelement (1), einen Ventilkörper (2), sowie eine Hülse (3), wobei der Ventilkörper (2) in der Hülse (3) derart bewegbar ist, dass er in einer ersten Position auf dem Ventilsitzelement (1) aufliegt und in einer zweiten Position in einem Abstand vom Ventilsitzelement (1) angeordnet ist, wobei das Ventilsitzelement (1) eine Bohrung (11) aufweist, die vom Ventilkörper (2) in der ersten Position verschliessbar ist, wobei zwischen dem Ventilkörper (2) und der Hülse (3) ein Federelement (4) angeordnet ist, wobei das Federelement ein erstes Ende (41) und ein zweites Ende (42) aufweist, wobei der Ventilkörper (2) durch das Federelement (4) in der ersten Position gehalten ist, solange der in der Bohrung (11) anliegende Fluiddruck kleiner als die Schliesskraft des Federelements (4) ist, wobei das erste Ende (41) des Federelements (4) mit dem Ventilkörper (2) verbunden ist, wobei die Hülse (3) ein erstes Mantelelement (31) aufweist, welches zur Aufnahme im Kanal (5) bestimmt ist, wobei die Hülse (3) ein zweites Mantelelement (32) aufweist, welches zur Aufnahme des zweiten Endes (42) des Federelements (4) bestimmt ist, wobei das Federelement (4) in einer Ausnehmung (33) des zweiten Mantelelements (32) gehalten ist, **dadurch gekennzeichnet, dass** die Hülse (3) ein Verbindungselement (132) enthält, welches das erste Mantelelement (31) mit dem zweiten Mantelelement (32) verbindet, wobei das Verbindungselement (132) einen ersten zylinderförmigen Abschnitt und einen zweiten zylinderförmigen Abschnitt aufweist und wobei das zweite Mantelelement (32) einen ersten zylinderförmigen Abschnitt (37) und einen zweiten zylinderförmigen Abschnitt (38) aufweist, wobei der erste zylinderförmige Abschnitt (37) eine zentrale Bohrung für die Aufnahme des Ventilkörpers (2) ausbildet, wobei der Innendurchmesser des zweiten zylinderförmigen Abschnitts (38) kleiner als der Innendurchmesser des ersten zylinderförmigen Abschnitts (37) ist, wobei zwischen dem ersten zylinderförmigen Abschnitt (37) und dem zweiten zylinderförmigen Abschnitt (38) ein konisches Übergangsstück ausgebildet ist, wobei die Innenfläche des konischen Übergangsstücks als Auflagefläche für den Ventilkörper (2) dient, wenn sich der Ventilkörper (2) in der Öffnungsposition befindet.

2. Rückschlagventil (10) nach Anspruch 1, wobei das erste Mantelelement (31) einen Aussendurchmesser (35) aufweist, welcher im Wesentlichen dem Innendurchmesser des Kanals (5) entspricht.

3. Rückschlagventil (10) nach einem der vorhergehenden Ansprüche, wobei das zweite Mantelelement (32) einen maximalen Aussendurchmesser (34) aufweist, der kleiner als ein maximaler Aussendurchmesser (35) des ersten Mantelelements (31) ist.

4. Rückschlagventil (10) nach einem der vorhergehenden Ansprüche, wobei ein Aussendurchmesser (36) der Ausnehmung (33) kleiner als ein maximaler Aussendurchmesser (35) des ersten Mantelelements (31) ist.

5. Rückschlagventil (10) nach einem der vorhergehenden Ansprüche, wobei der zweite zylinderförmige Abschnitt (38) als ein Mantelelement der Ausnehmung (33) ausgebildet ist.

6. Rückschlagventil (10) nach Anspruch 5, wobei der erste zylinderförmige Abschnitt (37) einen Inndurchmesser (39) aufweist, der mindestens einem Aussendurchmesser (21) des Ventilkörpers (2) entspricht, wobei die Hülse (3) eine Öffnung (131) enthalten kann, die im zweiten Mantelelement (32) angeordnet ist, wobei die Hülse (3) das Verbindungselement (132) enthält, welches das erste Mantelelement (31) mit dem zweiten Mantelelement (32) verbindet.

7. Rückschlagventil (10) nach einem der vorhergehenden Ansprüche, wobei der Ventilkörper (2) ein kugelförmiger Ventilkörper ist.

8. Rückschlagventil (10) nach einem der vorhergehenden Ansprüche, wobei zwischen dem Ventilsitzelement (1) und der Hülse (3) ein Hohlraum (50) angeordnet ist, wobei der Hohlraum (50) mit einer Mehrzahl von Öffnungen (40) verbunden sein kann oder wobei die Bohrung (11) mit dem Hohlraum (50) verbunden sein kann, wenn der Ventilkörper (2) die Bohrung (11) nicht verschliesst.

9. Rückschlagventil (10) nach Anspruch 8, wobei die Querschnittsfläche des Hohlraums (50) grösser als die Querschnittsfläche der Bohrung (11) ist.

10. Rückschlagventil (10) nach einem der vorhergehenden Ansprüche, wobei das zweite Mantelelement (32) eine Mehrzahl von Öffnungen (40) enthält oder wobei das Verbindungselement (132) eine Mehrzahl von Öffnungen (40) enthält.

11. Rückschlagventil (10) nach einem der vorhergehenden Ansprüche, wobei das zweite Mantelelement (32) eine topfförmige Ausnehmung (33) enthält.

12. Rückschlagventil (10) nach Anspruch 11, wobei die topfförmige Ausnehmung (33) eine axialsymmetrische Öffnung (43) enthält.

13. Rückschlagventil (10) nach Anspruch 12, wobei die axialsymmetrische Öffnung (43) einen Durchmesser aufweist, der kleiner als der Innendurchmesser des Federelements (4) ist.

## Claims

1. A check valve (10) for reception in a fluid passage (5), comprising a valve seat element (1), a valve body (2), and a sleeve (3) wherein the valve body (2) is moveable in such a manner in the sleeve (3), that it rests in a first position on the valve seat element (1) and it is arranged a distance with respect to the valve seat element (1) in a second position, wherein the valve seat element (1) contains an opening (11) which can be closed by the valve body (2) in the first position, wherein a spring element (4) is arranged between the valve body (2) and the sleeve (3), wherein the spring element comprises a first end (41) and a second end (42), wherein the valve body (2) is retained by the spring element (4) in the first position as long as the fluid pressure present in the opening (11) is smaller than the closing force of the spring element (4), wherein the first end (41) of the spring element (4) is connected to the valve body (2), wherein the sleeve (3) comprises a first jacket element (31) which is configured to be retained in the passage (5), wherein the sleeve (3) comprises a second jacket element (32) which is configured to retain the second end (42) of the spring element (4), wherein the spring element (4) is retained in an opening (33) of the second jacket element (32), **characterized in that** the sleeve (3) comprises a connection element (132), which connects the first jacket element (31) to the second jacket element (32), wherein the connection element (132) comprises a first cylindrical portion (37) and a second cylindrical portion (38) and wherein the second jacket element (32) comprises a first cylindrical portion (37) and a second cylindrical portion (38), wherein the first cylindrical portion (37) comprises a central opening for the reception of the valve body (2), wherein the inner diameter of the second cylindrical portion (38) is smaller than the inner diameter of the first cylindrical portion (37), wherein a conical adapter is arranged between the first cylindrical portion (37) and the second cylindrical portion (38), wherein the inner surface of the conical adapter is used as a support surface for the valve body (2), if the valve body (2) is in the open position.

2. The check valve (10) according to claim 1, wherein the first jacket element (31) comprises an external diameter (35), which substantially corresponds to the inner diameter of the passage (5).

3. The check valve (10) according to one of the preceding claims, wherein the second jacket element (32) comprises a maximum external diameter (34), which is smaller than a maximum external diameter (35) of the first jacket element (31).

4. The check valve (10) according to one of the preceding claims, wherein an external diameter (36) of the opening (33) is the same as or smaller than the maximum external diameter (35) of the first jacket element (31).

5. The check valve (10) according to one of the preceding claims, wherein the second cylindrical portion (38) is configured as a jacket element of the opening (33).

6. The check valve (10) according to claim 5, wherein the first cylindrical portion (37) comprises an inner diameter (39) which corresponds at least to an external diameter (21) of the valve body (2), wherein the sleeve (3) can comprise an opening (131) which is arranged in the second jacket element (32), wherein the sleeve (3) comprises the connection element (132), which connects the first jacket element (31) to the second jacket element (32).

7. The check valve (10) according to one of the preceding claims, wherein the valve body (2) is configured as a spherical valve body.

8. The check valve (10) according to one of the preceding claims, wherein a hollow space (50) is arranged between the valve seat element (1) and the sleeve (3), wherein the hollow space (50) can be connected to a plurality of openings (40), or wherein the opening (11) can be connected to the hollow space (50), if the valve body (2) doesn't close the opening.

9. The check valve (10) according to claim 8, wherein the cross-sectional area of the hollow space (50) is larger than the cross-sectional area of the opening (11).

10. The check valve (10) according to one of the preceding claims, wherein the second jacket element (32) contains a plurality of openings (40) or wherein the connection element (132) contains a plurality of openings (40).

11. The check valve (10) according to one of the preceding claims, wherein the second jacket element (32) contains a cup-shaped opening (33).

12. The check valve (10) according to claim 11, wherein the cup-shaped opening (33) contains an axially symmetrical opening (43).

13. The check valve (10) according to claim 12, wherein the axially symmetrical opening (43) comprises a diameter which is smaller than the inner diameter of the spring element. (4).

## Revendications

1. Soupape anti-retour (10) destiné à être reçu dans un passage de fluide (5), comprenant un élément de siège de soupape (1), un corps de soupape (2) et un manchon (3) dans lequel le corps de soupape (2) est mobile dans de telle manière dans le manchon (3), qu'il repose dans une première position sur l'élément de siège de soupape (1) et qu'il est disposé à une distance par rapport à l'élément de siège de soupape (1) dans une seconde position, dans laquelle l'élément de siège de soupape (1) contient une ouverture (11) qui peut être fermée par le corps de soupape (2) dans la première position, dans laquelle un élément à ressort (4) est disposé entre le corps de soupape (2) et le manchon (3), dans lequel l'élément à ressort comprend une première extrémité (41) et une seconde extrémité (42), dans lequel le corps de soupape (2) est retenu par l'élément à ressort (4) dans la première position tant que la pression de fluide présente dans l'ouverture (11) est inférieure à la force de fermeture de l'élément à ressort (4), dans lequel le premier extrémité (41) de l'élément à ressort (4) est connectée au corps de soupape (2), dans lequel le manchon (3) comprend un premier élément de chemise (31) qui est configuré pour être retenu dans le passage (5), dans lequel le le manchon (3) comprend un deuxième élément de chemise (32) qui est configuré pour retenir la seconde extrémité (42) de l'élément à ressort (4), dans lequel l'élément à ressort (4) est retenu dans une ouverture (33) du deuxième élément de chemise (32), **caractérisé en ce que** le manchon (3) comprend un élément de connexion (132), qui relie le premier élément de chemise (31) au deuxième élément de chemise (32), dans lequel l'élément de connexion (132) comprend une première partie cylindrique (37) et une deuxième partie cylindrique (38) et dans lequel le deuxième élément de chemise (32) comprend une première partie cylindrique (37) et une deuxième partie cylindrique (38), dans lequel la première partie cylindrique (37) comprend une ouverture centrale pour la réception du corps de soupape (2), dans lequel le diamètre intérieur de la deuxième partie cylindrique (38) est plus petit que le diamètre intérieur de la première partie cylindrique (37), dans lequel un adaptateur conique est disposé entre la première partie cylindrique (37) et la deuxième partie cylindrique (38), dans lequel la surface intérieure de l'adaptateur conique est utilisée comme surface de support pour le corps de soupape (2), si le corps de soupape (2) est en position ouverte.

2. La soupape anti-retour (10) selon la revendication 1, dans lequel le premier élément de chemise (31) comprend un diamètre extérieur (35), qui correspond sensiblement au diamètre intérieur du passage (5).

3. La soupape anti-retour (10) selon l'une des revendications précédentes, dans lequel le deuxième élément de chemise (32) comprend un diamètre externe maximal (34), qui est plus petit qu'un diamètre externe maximal (35) du premier élément de chemise (31).

4. La soupape anti-retour (10) selon l'une des revendications précédentes, dans lequel un diamètre externe (36) de l'ouverture (33) est identique ou inférieur au diamètre externe maximal (35) du premier élément de chemise (31).

5. La soupape anti-retour (10) selon l'une des revendications précédentes, dans lequel la deuxième partie cylindrique (38) est configurée comme un élément de chemise de l'ouverture (33).

6. La soupape anti-retour (10) selon la revendication 5, dans lequel la première partie cylindrique (37) comprend un diamètre intérieur (39) qui correspond au moins à un diamètre extérieur (21) du corps de soupape (2), dans lequel le manchon (3) peut comprendre une ouverture (131) qui est disposée dans le deuxième élément de chemise (32), dans laquelle le manchon (3) comprend l'élément de connexion (132), qui relie le premier élément de chemise (31) au deuxième élément de chemise (32).

7. La soupape anti-retour (10) selon l'une des revendications précédentes, dans lequel le corps de soupape (2) est configuré comme un corps de soupape sphérique.

8. La soupape anti-retour (10) selon l'une des revendications précédentes, dans lequel un espace creux (50) est disposé entre l'élément de siège de soupape (1) et le manchon (3), dans lequel l'espace creux (50) peut être connecté à une pluralité d'ouvertures (40), ou dans lesquelles l'ouverture (11) peut être connectée à l'espace creux (50), si le corps de soupape (2) ne ferme pas l'ouverture.

9. La soupape anti-retour (10) selon la revendication 8, dans lequel la zone de section transversale de l'espace creux (50) est plus grande que la zone de section transversale de l'ouverture (11).

10. La soupape anti-retour (10) selon l'une des revendications précédentes, dans lequel le deuxième élément de chemise (32) contient une pluralité d'ouvertures (40) ou dans lequel l'élément de connexion (132) contient une pluralité d'ouvertures (40).

11. La soupape anti-retour (10) selon l'une des revendications précédentes, dans lequel le deuxième élément de chemise (32) contient une ouverture en forme de coupelle (33).

12. La soupape anti-retour (10) selon la revendication 11, dans lequel l'ouverture en forme de coupelle (33) contient une ouverture axialement symétrique (43).

13. La soupape anti-retour (10) selon la revendication 12, dans lequel l'ouverture axialement symétrique (43) comprend un diamètre qui est plus petit que le diamètre intérieur de l'élément à ressort. (4).
